# DEMANDE DE BREVET EUROPEEN

(11) **EP 1 515 416 A1**
(43) Date de publication de la demande: **16.03.2005**
(21) Numéro de dépôt: 04019384.9
(22) Date de dépôt: 16.08.2004
(51) Int. Cl.: H02K 9/06, F04D 25/08

(54) **Dispositif pour le support d'un moteur électrique entraînant une turbine, en particulier pour un appareil de chauffage, ventilation et/ou climatisation de véhicule automobile**

(30) Priorité: 10.09.2003 FR 0310649
(71) Demandeur: VALEO CLIMATISATION, 78321 La Verrière (FR)
(72) Inventeur: Lebecq, Olivier, 78390 Bois d'Arcy (FR); Pierres, Philippe, 78990 Elancourt (FR)

(57) **Abrégé**

Le dispositif (10) de l'invention comprend un boîtier conformé présentant une paroi de fond (12) raccordée à une paroi périphérique (14) pour délimiter un logement (20) de réception de l'enveloppe (22) d'un moteur électrique (24) entraînant une turbine (32), cette dernière étant reçue dans une volute (26). La paroi de fond (12) est percée d'au moins deux trous (48) à distance de l'axe de rotation (XX) défini par l'arbre du moteur pour permettre le passage d'un flux d'air de refroidissement (F) qui traverse l'enveloppe (22) du moteur et rejoint la volute (36). Application notamment aux appareils de chauffage, ventilation et/ou climatisation des véhicules automobiles.

## Description

L'invention concerne un dispositif pour le support d'un moteur électrique entraînant une turbine, en particulier pour un appareil de chauffage, ventilation et/ou climatisation de véhicule automobile.

Elle concerne plus particulièrement un dispositif pour le support d'un moteur électrique entraînant une turbine, dans lequel le moteur électrique comporte une enveloppe et un arbre d'entraînement de la turbine, qui définit un axe de rotation, le dispositif comprenant un boîtier conformé présentant une paroi de fond raccordée à une paroi périphérique pour délimiter un logement de réception de l'enveloppe du moteur, qui débouche dans une volute de réception de la turbine.

L'ensemble moteur-turbine, encore appelé "moto-ventilateur" ou "pulseur", est destiné à pulser un flux d'air et il trouve une application préférentielle dans les appareils de chauffage, ventilation et/ou climatisation des véhicules automobiles. L'ensemble moteur-turbine peut alors servir à envoyer un flux d'air dans un boîtier de traitement de l'appareil de chauffage, ventilation et/ou climatisation pour produire un flux d'air traité, ou encore à envoyer un flux d'air traité provenant d'un tel boîtier de traitement vers des buses placées en des endroits choisis de l'habitacle du véhicule.

L'un des problèmes que pose un tel dispositif de support est celui du refroidissement du moteur électrique qui entraîne la turbine. ,

Il est connu pour cela, comme enseigné par exemple par la publication FR-A-2 412 976, d'interrompre la paroi périphérique du dispositif de support afin de définir au moins un canal pour le refroidissement du moteur, ce canal étant généralement délimité par deux parois latérales opposées qui s'étendent dans une direction sensiblement radiale par rapport à l'axe de rotation du moteur.

Cette solution connue nécessite des outillages spéciaux pour la réalisation du dispositif de support, lequel est habituellement formé par moulage d'une matière plastique.

En outre, la présence du canal de refroidissement, qui fait saillie à l'extérieur du boîtier, engendre un encombrement non négligeable.

L'invention a notamment pour but de surmonter les inconvénients précités.

Elle vise en particulier à procurer un dispositif de support du type défini précédemment qui permet de refroidir le moteur électrique en supprimant le canal de refroidissement utilisé dans la technique antérieure.

L'invention vise notamment à procurer un tel dispositif de support qui permet de réaliser le refroidissement du moteur électrique par des moyens simples, sans nécessiter d'outillage coûteux et sans augmenter l'encombrement du boîtier de dispositif.

Elle vise encore à procurer un tel dispositif de support d'un moteur électrique entraînant une turbine, qui trouve une application particulière dans les appareils de chauffage, ventilation et/ou climatisation de véhicules automobiles.

L'invention propose à cet effet un dispositif de support d'un moteur électrique entraînant une turbine, comme défini en introduction, dans lequel la paroi de fond est percée d'au moins deux trous à distance de l'axe de rotation du moteur, pour permettre le passage d'un flux d'air de refroidissement qui traverse l'enveloppe du moteur et rejoint la volute.

Ainsi, le refroidissement du moteur s'effectue dans des conditions contrôlées grâce à la présence de trous aménagés dans la paroi de fond du boîtier pour permettre le passage d'un flux d'air qui est aspiré par la turbine et est envoyé dans la volute.

Cette solution permet d'obtenir un refroidissement efficace, sans la nécessité d'un outillage particulier pour réaliser le boîtier, et sans prévoir un canal de refroidissement, comme dans les solutions antérieures.

Dans une forme de réalisation préférée de l'invention, les trous sont circulaires et calibrés pour contrôler le débit du flux d'air de refroidissement qui traverse le moteur électrique.

Il en résulte que le flux d'air de refroidissement qui rejoint la volute ne perturbe pas le comportement du flux d'air qui est entraîné par la turbine.

De préférence, les trous sont à égale distance de l'axe et à des intervalles angulaires égaux.

Dans une forme de réalisation préférée de l'invention, la paroi de fond est percée de trois trous situés à des intervalles angulaires de 120°.

Selon une autre caractéristique de l'invention, la paroi de fond s'étend à distance d'une extrémité de l'arbre, qui est opposée à une autre extrémité de l'arbre, sur laquelle est calée la turbine.

Selon une autre caractéristique de l'invention, la paroi cylindrique est raccordée à une paroi frontale sensiblement annulaire faisant partie de la volute.

Sous un autre aspect, l'invention concerne un appareil de chauffage, ventilation et/ou climatisation de l'habitacle d'un véhicule automobile, du type comprenant au moins un pulseur d'air présentant un moteur électrique entraînant une turbine, dans lequel le moteur électrique est supporté par un dispositif tel que défini précédemment.

Dans une application, le pulseur d'air est réalisé en tant qu'un pulseur principal monté à l'entrée d'un boîtier de traitement d'air que comporte l'appareil, ce pulseur principal étant agencé pour envoyer un flux d'air à traiter dans le boîtier de traitement d'air.

Dans une autre application, le pulseur d'air est réalisé en tant qu'un pulseur relais monté à la sortie d'un boîtier de traitement d'air que comporte l'appareil, ce pulseur relais étant agencé pour envoyer un flux d'air traité provenant du boîtier de traitement d'air vers au moins une buse de distribution située en un emplacement choisi à l'intérieur de l'habitacle.

Dans ce dernier cas, le moteur électrique du pulseur relais possède avantageusement une consommation inférieure à 120 Watts, le dispositif de support du moteur possédant des trous circulaires dont le diamètre est inférieur ou égal à 4 mm.

Dans la description qui suit, faite seulement à titre d'exemple, on se réfère aux dessins annexés, sur lesquels :
- la figure 1 est une vue en coupe axiale d'un dispositif de support selon l'invention destiné à supporter un moteur électrique entraînant une turbine ;
- la figure 2 est une vue en plan de la paroi de fond du boîtier du dispositif de la figure 1 ;
- la figure 3 est une vue en perspective du dispositif de support de la figure 1, dans lequel la volute a été enlevée ;
- la figure 4 est une vue en perspective d'un dispositif de support selon l'invention, dans lequel la volute est munie d'un conduit d'entrée d'air ; et
- la figure 5 est une vue en perspective d'un appareil de chauffage, ventilation et/ou climatisation de véhicule automobile comprenant un boîtier de traitement d'air dont l'entrée est reliée à un pulseur d'air principal et dont les sorties sont reliées respectivement à deux pulseurs relais, le pulseur principal et les deux pulseurs relais comprenant un dispositif de support selon l'invention.

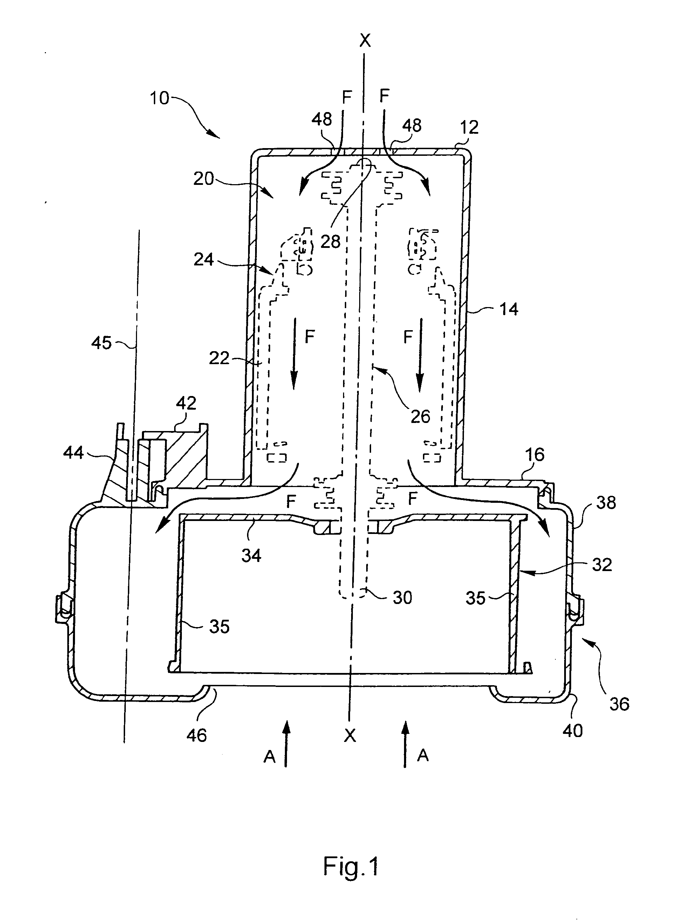

Le dispositif de support des figures 1 à 3 comprend un boîtier conformé 10 obtenu par moulage d'une matière plastique. Le boîtier 10 présente une paroi de fond 12 raccordée à une extrémité d'une paroi périphérique 14 de forme cylindrique d'axe XX. A son autre extrémité, la paroi périphérique 14 se raccorde à une paroi frontale 16 de forme annulaire. La paroi de fond 12, de forme circulaire, s'étend dans un plan perpendiculaire à l'axe XX.

Le boîtier 10 délimite ainsi un logement interne 20 ouvert du côté de la paroi frontale 16 et destiné à loger l'enveloppe 22 d'un moteur électrique 24. L'enveloppe 22 du moteur est maintenue dans le logement 20 par des moyens classiques, non représentés ici, qui permettent aussi d'amortir les vibrations du moteur.

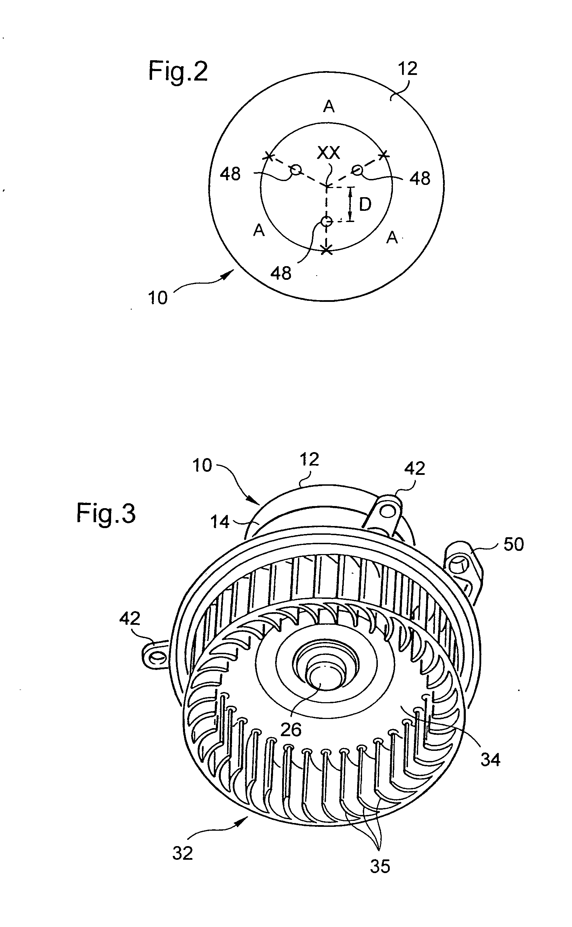

Le moteur électrique 24 comporte un arbre de rotation 26 s'étendant dans la direction de l'axe XX qui constitue aussi l'axe de rotation du moteur. L'arbre de rotation 26 a une première extrémité 28 contenue dans le boîtier et située à faible distance de la paroi 12, et une seconde extrémité 30 sur laquelle est calée une turbine 32 de type centrifuge. Cette turbine est avantageusement moulée d'une seule pièce en matière plastique et comprend une roue 34 calée sur l'extrémité 30 de l'arbre 26 et une multiplicité d'ailettes radiales 35 prévues à la partie périphérique de la roue 34. La structure de cette turbine centrifuge 32, qui est en elle-même connue, est mieux visible sur la vue en perspective de la figure 3.

Le logement 20 du boîtier 10 débouche dans une volute 36 qui reçoit la turbine 32. Cette volute est réalisée en deux parties par moulage d'une matière plastique. Elle comprend une partie 38 emboîtée sur la périphérie de la paroi frontale 16 et une partie 40 emboîtée sur la partie 38. La paroi frontale 16 comporte une pluralité de pattes 42, ici au nombre de trois, qui coopérèrent avec des pattes 44 venues de moulage avec la partie 38. Les pattes 42 sont fixées respectivement aux pattes 44 par des vis, non représentées, comme indiqué en 45.

La partie 40 délimite une ouverture circulaire 46, centrée sur l'axe XX pour permettre l'admission d'un flux d'air comme représenté par les flèches A, dans la direction axiale. Cet air est ensuite accéléré par la turbine 32, entraînée par le moteur 24, dans la direction centrifuge. L'air ainsi accéléré est évacué, en direction tangentielle, par une sortie (non visible sur la figure 1) aménagée à la périphérie de la volute 36.

Pour assurer le refroidissement du moteur, la paroi de fond 12 du boîtier comporte (figures 1 et 2) plusieurs trous 48 qui, dans l'exemple, sont au nombre de trois. Ces trous 48 sont des orifices circulaires de diamètre calibré. Ils sont tous situés à une même distance D (figure 2) de l'axe XX et sont disposés à des intervalles angulaires A égaux, c'est-à-dire ici à des intervalles angulaires de 120°. Ces trous sont destinés à permettre l'admission contrôlée d'un flux d'air extérieur, comme représenté par les flèches F de la figure 1.

Ce flux d'air pénètre dans le logement 20, traverse ensuite l'enveloppe 22 du moteur au travers d'ouvertures classiquement aménagées dans l'enveloppe, pour rejoindre ensuite la volute. Ce flux d'air, dont le débit est contrôlé et beaucoup plus faible que le débit du flux d'air A, se trouve mélangé à ce flux d'air A et est évacué avec lui de la volute 36. La diffusion du flux d'air F dans l'enveloppe du moteur se répartit uniformément au travers des balais, de la cage, du bobinage et des autres composants du moteur.

Du fait que les trous 48 sont en nombre limité et présentent un diamètre calibré, le débit du flux d'air F peut être contrôlé et limité de manière à ne pas perturber l'écoulement du flux d'air A.

En effet, la température du flux d'air F se trouve augmentée lorsqu'il traverse le moteur, et il ne faudrait pas que cette augmentation de température puisse affecter défavorablement la température du flux d'air A qui est évacué de la volute, spécialement lorsque ce flux d'air A est un flux d'air froid, éventuellement réfrigéré.

Sur la vue en perspective de la figure 3, la volute 36 a été ôtée pour mieux montrer la structure de la turbine 32. On voit également sur cette figure une extrémité d'un connecteur électrique 50 servant à la connexion électrique du moteur 24 au travers du boîtier 10.

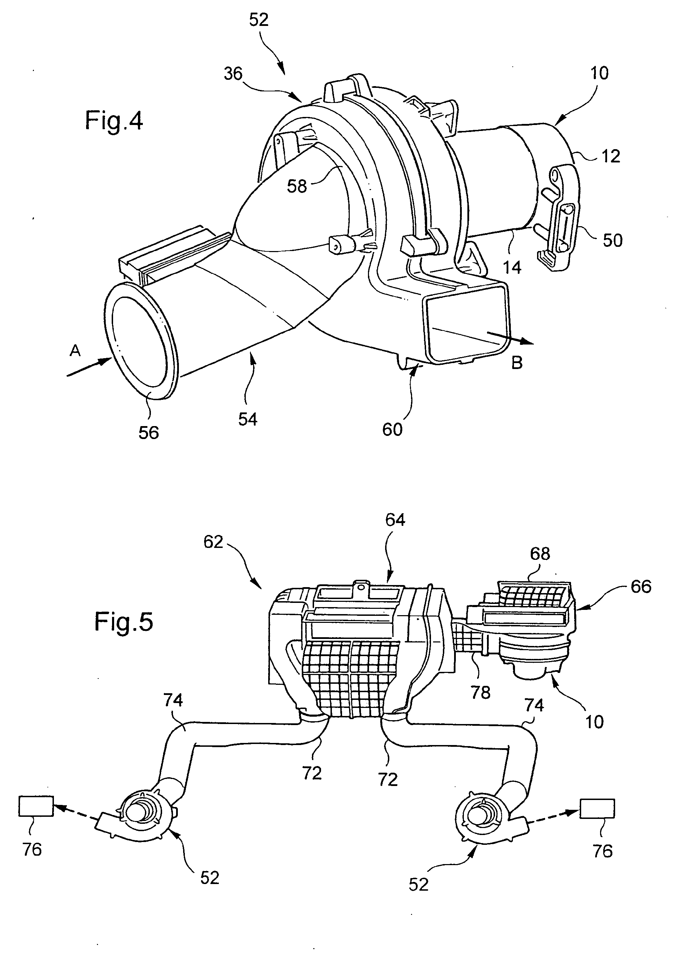

On se réfère maintenant à la figure 4 qui montre un pulseur d'air 52 comprenant un dispositif de support 10 analogue à celui des figures 1 à 3 logeant intérieurement un ensemble moteur-turbine analogue à celui décrit précédemment pour constituer ainsi un groupe moto-ventilateur. On aperçoit également sur la figure 4 le connecteur 50 décrit précédemment en référence à la figure 3.

Sur la volute 36 est monté un conduit d'entrée 54 qui présente une ouverture d'entrée 56 et une ouverture de sortie 58, cette dernière étant reliée à l'ouverture 46 de la volute. Ce conduit d'entrée 54 est destiné à acheminer un flux d'air comme représenté par la flèche A. Ce flux d'air est ensuite accéléré tangentiellement par la turbine et évacué par un conduit de sortie 60 qui s'étend dans la direction tangentielle de la volute. Ce flux d'air est évacué dans la direction de la flèche B.

Le pulseur 52 de la figure 4 peut être utilisé notamment pour constituer un pulseur principal, mais surtout un pulseur secondaire, encore appelé pulseur relais, d'un appareil de chauffage, ventilation et/ou climatisation de véhicule automobile. Un tel pulseur relais est utilisé le plus souvent pour le chauffage, la ventilation et/ou la climatisation des places arrière d'un habitacle de véhicule automobile et doit donc être d'un faible encombrement, tout en procurant un refroidissement efficace de son moteur électrique.

On a représenté à la figure 5 un appareil 62 de chauffage, ventilation et/ou climatisation de véhicule automobile comprenant un boîtier de traitement d'air désigné dans son ensemble par la référence 64. Ce boîtier 64 loge intérieurement au moins un radiateur de chauffage et éventuellement un évaporateur de climatisation pour fournir un flux d'air à température ajustée destiné à être envoyé ensuite dans l'habitacle d'un véhicule automobile.

Le boîtier 64 est alimenté à partir d'un pulseur principal 66 qui est réalisé conformément aux enseignements des figures 1 à 4. Ce pulseur 66 comprend un support 10 analogue à celui décrit précédemment et raccordé à une interface d'entrée 68 permettant d'admettre, dans le support, soit de l'air extérieur prélevé hors de l'habitacle du véhicule automobile, soit de l'air recirculé prélevé à l'intérieur de l'habitacle, soit un mélange de ces deux flux d'air, et cela d'une manière en soi connue. Le flux d'air est ensuite envoyé dans le boîtier par un conduit d'entrée 70.

Le boîtier de traitement d'air 64 comporte deux sorties 72 destinées à envoyer l'air traité dans des régions différentes de l'habitacle, par exemple vers les places arrière du véhicule. Les deux sorties 72 sont reliées par des conduits 74 à deux pulseurs relais 52 analogues à celui de la figure 4. Ces deux pulseurs relais sont destinés à envoyer l'air traité vers deux buses respectives 76 placées en des emplacements choisis à l'intérieur de l'habitacle. Dans l'exemple, ces buses débouchent au niveau des places arrière de l'habitacle, respectivement du côté droit et du côté gauche.

Les moteurs électriques respectifs du pulseur principal 66 et des pulseurs relais 52 sont chacun refroidis par des moyens de refroidissement du type décrit en référence aux figures 1 à 3.

Comme déjà indiqué, l'invention permet de contrôler le débit du flux d'air de refroidissement du moteur. Ainsi, dans le cas d'un pulseur relais 52, le moteur électrique de ce dernier aura de préférence une consommation inférieure à 120 Watts. Dans ce cas, le dispositif de support du moteur comportera de préférence des trous circulaires dont le diamètre sera inférieur ou égal à 4 mm.

Bien entendu, l'invention n'est pas limitée aux formes de réalisation décrites précédemment à titre d'exemple et s'étend à d'autres variantes.

En particulier, l'invention est susceptible de nombreuses variations, notamment en ce qui concerne le nombre, la position et les dimensions des trous aménagés dans la paroi de fond du dispositif de support.

L'invention trouve une application préférentielle aux appareils de chauffage, ventilation et/ou climatisation de véhicules automobiles.

## Revendications

1. Dispositif pour le support d'un moteur électrique (24) entraînant une turbine (32), dans lequel le moteur électrique comporte une enveloppe (22) et un arbre d'entraînement (26) de la turbine, qui définit un axe de rotation(XX), le dispositif comprenant un boîtier conformé (10) présentant une paroi de fond (12) raccordée à une paroi périphérique (14) pour délimiter un logement (20) de réception de l'enveloppe du moteur, qui débouche dans une volute (36) de réception de la turbine,
**caractérisé en ce que** la paroi de fond (12) est généralement plane et percée d'au moins deux trous (48) situés à distance de l'axe de rotation (XX) du moteur (24), pour permettre le passage d'un flux d'air de refroidissement (F) qui traverse l'enveloppe du moteur (22) et rejoint la volute (36).

2. Dispositif selon la revendication 1, **caractérisé en ce que** les trous (48) sont circulaires et calibrés pour contrôler le débit du flux d'air de refroidissement (F) qui traverse le moteur électrique (24).

3. Dispositif selon l'une des revendications 1 et 2, **caractérisé en ce que** les trous (48) sont à égale distance (D) de l'axe (XX) et à des intervalles angulaires (A) égaux.

4. Dispositif selon l'une des revendications 1 à 3, **caractérisé en ce que** la paroi de fond (12) est percée de trois trous (48) situés à des intervalles angulaires de 120°.

5. Dispositif selon l'une des revendications 1 à 4, **caractérisé en ce que** la paroi de fond (12) s'étend à distance d'une extrémité (28) de l'arbre (26), qui est opposée à une autre extrémité (30) de l'arbre, sur laquelle est calée la turbine (32).

6. Dispositif selon l'une des revendications 1 à 5, **caractérisé en ce que** la paroi cylindrique (14) est raccordée à une paroi frontale (16) sensiblement annulaire faisant partie de la volute (36).

7. Appareil de chauffage, ventilation et/ou climatisation de l'habitacle d'un véhicule automobile, du type comprenant au moins un pulseur d'air (66 ; 52) présentant un moteur électrique (24) entraînant une turbine (32), **caractérisé en ce que** le moteur électrique (24) est supporté par un dispositif (10) selon l'une des revendications 1 à 6.

8. Appareil selon la revendication 7, **caractérisé en ce que** le pulseur d'air est réalisé en tant qu'un pulseur principal (66) monté à l'entrée d'un boîtier de traitement d'air (64) que comporte l'appareil, le pulseur principal (66) étant agencé pour envoyer un flux d'air à traiter dans le boîtier de traitement d'air (64).

9. Appareil selon la revendication 7, **caractérisé en ce que** le pulseur d'air est réalisé en tant qu'un pulseur relais (52) monté à la sortie d'un boîtier de traitement d'air (64) que comporte l'appareil, le pulseur relais (52) étant agencé pour envoyer un flux d'air traité provenant du boîtier de traitement d'air (64) vers au moins une buse de distribution (76) située en un emplacement choisi à l'intérieur de l'habitacle.

10. Appareil selon la revendication 9, **caractérisé en ce que** le moteur électrique du pulseur relais (52) a une consommation inférieure à 120 Watts et que le dispositif de support du moteur possède des trous circulaires (48) dont le diamètre est inférieur ou égal à 4 mm.
